# EUROPÄISCHE PATENTSCHRIFT

(11) **EP 3 599 388 B1**
(45) Veröffentlichungstag und Bekanntmachung des Hinweises auf die Patenterteilung: **20.01.2021**
(21) Anmeldenummer: 19185223.5
(22) Anmeldetag: 09.07.2019
(51) Int. Cl.: F16C 35/067, F16C 33/66

(54) **LADEEINRICHTUNG**
CHARGING DEVICE
DISPOSITIF DE CHARGEMENT

(30) Priorität: 27.07.2018 DE 102018212619
(43) Veröffentlichungstag der Anmeldung: 29.01.2020
(73) Patentinhaber: BMTS Technology GmbH & Co. KG, 70376 Stuttgart (DE)
(72) Erfinder: KISSLING, Konrad, 70197 Stuttgart (DE); KLEINSCHMIDT, Ruediger, 74354 Besigheim (DE); KUHNE, Oliver, 70374 Stuttgart (DE); SCHMITT, Steffen, 71254 Ditzingen (DE); STETTER, Frieder, 70597 Stuttgart (DE)
(74) Vertreter: BRP Renaud & Partner mbB Rechtsanwälte Patentanwälte Steuerberater

(56) Entgegenhaltungen:
- EP-A1- 3 284 964
- JP-A- 2011 220 167

## Beschreibung

Die vorliegende Erfindung betrifft eine Ladeeinrichtung, insbesondere einen Abgasturbolader, mit einem Lagergehäuse und einer darin angeordneten Lagerkartusche zur Lagerung einer Welle, gemäß dem Oberbegriff des Anspruchs 1. Die Erfindung betrifft außerdem ein Verfahren zur Montage einer Lagerkartusche in einer solchen Ladeeinrichtung.

Zur Befestigung einer Lagerkartusche in einem Lagergehäuse einer, insbesondere halbschwimmenden, Lagerung einer Welle, wird üblicherweise ein Sicherungsstift benötigt, der die Lagerkartusche gegen ein Verdrehen sowie eine axiale Bewegung sichert. Da die Positionierung der Lagerkartusche direkten Einfluss auf die minimal möglichen Konturspalte zwischen einem mit der Welle drehfest verbundenen Turbinenrad und einem Turbinengehäuse einer sich auf der einen Seite der Welle befindenden Turbine und zwischen einem ebenso drehfest mit der Welle verbundenen Verdichterrad und einem Verdichtergehäuse eines sich auf der entgegengesetzten Seite der Welle befindenden Verdichters hat, ist eine sehr genaue Positionierung der Lagerkartusche äußerst wichtig. Gleichzeitig dient die Öffnung, in die der Sicherungsstift eingebracht wird, in der Regel der Ölversorgung des Lagers. Darüber hinaus sollte die Montage des Lagerungsstiftes einfach sein, insbesondere sollte bei einem Positionieren des Sicherungsstiftes die Lagerkartusche nicht beschädigt werden.

Aus der US 8,449,199 B2 ist ein in das Lagergehäuse eingeschraubter Sicherungsstift bekannt, der in einen konischen Sitz eingeschraubt wird und so gleichzeitig eine fluidische Verbindung für das Öl zur Schmierung von Lagerstellen herstellt. Nachteilig hierbei ist, dass die konischen Dichtflächen des Stifts und des Sitzes im Lagergehäuse nur relativ aufwendig hergestellt werden können. Zudem muss der Sicherungsstift in das Gehäuse eingeschraubt werden, bevor der Sicherungsstift in die Lagerkartusche eingefädelt wird, was ein Verklemmen bewirken kann. Bei im Lagergehäuse verschraubten und von Öl um- oder durchströmten Sicherungsstiften, ergibt sich zudem häufig das Problem, dass das Gewinde mit dem Ölpfad in Verbindung steht, d.h. dass durch das Schneiden des Gewindes entstandene Späne unter Umständen in den Ölkreislauf gelangen können, was sich erheblich auf die Lebensdauer des Lagers auswirken kann.

Aus der EP 2 325 457 B1 ist ein Montageverfahren für einen in ein Lagergehäuse eingeschraubten Sicherungsstift einer Lagerkartusche bekannt, wobei der Sicherungsstift nicht von Öl durchströmt wird. Ferner wird ein Gehäuse mit einer Öffnung, einem Gewinde und einer Führungsfläche für den Sicherungsstift offenbart. Dabei muss die Lagerkartusche durch eine komplexe zweiseitige Montage mit einem dünnen Montagezentrierdorn und einem von der Gegenseite eingebrachten Sicherungsstift fixiert werden. Wesentlicher Nachteil dabei ist, dass das Lagergehäuse von zwei Seiten aus bearbeitet werden und zugänglich sein muss, wobei die beiden Bohrungen in der Lagerkartusche sehr genau zueinander ausgerichtet sein müssen, damit die Lagerkartusche beim Einschrauben des Sicherungspins nicht beschädigt wird.

Aus der US 3,811,741 A ist eine weitere Ladeeinrichtung bekannt, bei welcher zur Fixierung einer Lagerkartusche ebenfalls ein Sicherungsstift eingesetzt wird. Dieser wird gegen ein unbeabsichtigtes Lösen durch ein Sicherungselement, beispielsweise einen Sprengring, gesichert. Hierdurch wird eine zweiteilige Konstruktion geschaffen, die insbesondere wegen der bei Abgasturboladern von Kraftfahrzeugen typischen kompakten Bauweise aufwändig zu montieren und dadurch teuer ist.

Aus der DE 10 2016 215 275 A1 ist eine Lagereinrichtung eines Abgasturboladers zur Lagerung einer Welle in einem Lagergehäuse bekannt, bei der durch einen, von einer Nabe radial in die Lagerkartusche eingreifenden Sicherungsstift eine Lagesicherung der Lagerkartusche zumindest gegen Rotation gegeben ist. Der Sicherungsstift und die Lagerkartusche sind dabei über eine sphärisch oder ballig gekrümmte Lagerfläche aneinandergelagert.

Aus der EP 3 284 964 A1 ist eine Ladeeinrichtung eines Abgasturboladers bekannt mit den Merkmalen des Oberbegriffs des Anspruchs 1.

Nachteilig bei den aus dem Stand der Technik bekannten Ladeeinrichtungen ist dabei vor allem ein aufwändiger Montageprozess eines Sicherungsstiftes, oder eine Lösung, bei welcher Beschädigungen während des Montageprozesses nicht ausgeschlossen werden können.

Die vorliegende Erfindung beschäftigt sich daher mit dem Problem, für eine Ladeeinrichtung der gattungsgemäßen Art eine verbesserte oder zumindest eine alternative Ausführungsform anzugeben, die insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Fixierung einer Lagerkartusche/Lagerbuchse für eine Welle in einem Lagergehäuse einer Ladeeinrichtung dadurch zu vereinfachen, dass diese über einen Sicherungsstift ausgerichtet und fixiert wird, der einen derart langen Schaftabschnitt aufweist, dass er zunächst in eine Öffnung der Lagerkartusche eingreift und diese ausrichtet, bevor er über ein Gewinde in dem Lagergehäuse verschraubt wird. Die erfindungsgemäße Ladeeinrichtung, welche beispielsweise als Abgasturbolader ausgebildet sein kann, weist dabei ein Lagergehäuse sowie die zuvor beschriebene und darin angeordnete Lagerkartusche zur Lagerung der Welle auf. Gesichert wird die Lagerkartusche gegen ein Verdrehen und ein Verschieben in Axialrichtung über den zuvor beschriebenen Sicherungsstift, der in montiertem Zustand in eine Öffnung an der Lagerkartusche eingreift. Der Sicherungsstift selbst besitzt einen Schaftabschnitt und einen sich daran anschließenden Kopf, wobei in dem Lagergehäuse eine zugehörige Stiftaufnahme mit einem ersten Abschnitt mit einem Innengewindeabschnitt und einem zweiten Abschnitt vorgesehen ist, der einen größeren Durchmesser aufweist als der erste Abschnitt und über eine Radialstufe in den ersten Abschnitt übergeht. Die Radialstufe bildet dabei einen Axialanschlag für den Kopf des Sicherungsstiftes. Eine Länge L des Schaftabschnitts des Sicherungsstifts ist dabei so bemessen, dass dieser beim Montieren zuerst in die Öffnung der Lagerkartusche eingreift und diese ausrichtet, bevor der Außengewindeabschnitt mit dem Innengewindeabschnitt zusammenwirkt bzw. in diesen eingeschraubt werden kann. Dies bietet den großen Vorteil, dass der Sicherungsstift zur Montage zunächst in die Stiftaufnahme eingeführt und ohne Aufbringen großer Kräfte mit seinem freien Ende des Schaftabschnitts in die Öffnung der Lagerkartusche eingeführt werden kann und diese ausrichtet, bevor ein endgültiges Fixieren durch ein Verschrauben im ersten Abschnitt der Stiftaufnahme erfolgt. Dies erlaubt auch eine vergleichsweise einfache mechanische Bearbeitung des Sicherungsstiftes sowie der gesamten Stiftaufnahme, da an beiden lediglich der jeweilige Gewindeabschnitt aufwändiger bearbeitet werden muss, während die anderen Bereiche größere Toleranzen aufweisen können. Insgesamt kann somit eine vergleichsweise einfache aber dennoch hochpräzise Fixierung der Lagerkartusche erreicht werden, ohne dass befürchtet werden muss, dass die Lagerkartusche beschädigt wird, da diese bereits ausgerichtet und positioniert ist, bevor der Sicherungsstift mit seinem Außengewindeabschnitt mit dem lagergehäuseseitigen Innengewindeabschnitt zusammenwirkt. Ein relevantes Maß stellt dabei die Eingriffslänge des Schaftabschnitts in die Öffnung der Lagerkartusche dar, also die Länge, die das freie Ende des Schaftabschnitts in die Öffnung der Lagerkartusche eingeführt werden kann. Die von der Lagerkartusche aufgenommene Welle unterhalb bzw. radial innen von der Öffnung der Lagerkartusche begrenzt die Länge, die der Schaftabschnitt in die Öffnung der Lagerkartusche eingeführt werden kann.

Bei einer weiteren vorteilhaften Ausführungsform der erfindungsgemäßen Lösung weist der Sicherungsstift eine axiale Durchgangsöffnung auf, die insbesondere als Schmierölkanal ausgebildet ist. Hierdurch ist eine Schmierung der Lagerkartusche und Welle über den Sicherungsstift vergleichsweise einfach möglich. Zudem kann die axiale Durchgangsöffnung im Sicherungsstift zum Auffädeln desselben auf einen Führungsstift genutzt werden, über welchen der Sicherungsstift bei der Montage geführt ist.

Bei einer weiteren vorteilhaften Ausführungsform der erfindungsgemäßen Lösung weist die Lagerkartusche an einer der Öffnung gegenüberliegenden Seite eine Führungsstiftaufnahme auf. Über diese Führungsstiftaufnahme kann ein Führungsstift zum Führen des Sicherungsstifts eingesetzt werden, über welchen die Lagerkartusche ausgerichtet und wodurch die Montage des Sicherungsstiftes ebenfalls nochmals vereinfacht werden kann.

Zweckmäßig ist in der Stiftaufnahme ein dritter Abschnitt vorgesehen, der zwischen dem Innengewindeabschnitt und einer Lageröffnung des Lagergehäuses zur Lagerung der Welle liegt und der komplementär zum Schaftabschnitt des Sicherungsstiftes ausgebildet ist, aber kein Innengewinde aufweist. Das lagergehäuseseitige Innengewinde (Innengewindeabschnitt) ist somit nicht durchgängig ausgebildet, sondern in Richtung der Lagerkartusche begrenzt, wodurch beispielsweise eine Eindrehbegrenzung durch den begrenzten Innengewindeabschnitt und/oder durch das Aufliegen des Kopfes auf der Radialstufe gegeben ist. Dabei kann der dritte Abschnitt vorzugsweise auch als Zentrierbohrung für den Sicherungsstift dienen, die eine besonders genaue Positionierung des Sicherungsstifts, und damit der Lagerbuchse (=> geringe Konturspalte am Turbinen- und Verdichterrad) erlaubt.

Bei einer vorteilhaften Weiterbildung der erfindungsgemäßen Lösung ist an zumindest einem Längsende der axialen Durchgangsöffnung eine Fase angeordnet. Hierdurch kann ein besseres Auffädeln auf einen Führungsstift zur Montage des Sicherungsstiftes in der Stiftaufnahme erreicht werden.

Die vorliegende Erfindung beruht weiter auf dem allgemeinen Gedanken, ein Verfahren zur Montage der Lagerkartusche in der zuvor beschriebenen Ladeeinrichtung anzugeben, bei welchem zunächst die Lagerkartusche in einer Lageröffnung des Lagergehäuses eingelegt wird. Anschließend wird ein Führungsstift in die Stiftaufnahme im Lagergehäuse und durch die Öffnung der Lagerkartusche bis in die zuvor beschriebene Führungsstiftaufnahme eingeschoben und dadurch die Lagerkartusche ausgerichtet. Anschließend wird der Sicherungsstift auf den Führungsstift aufgefädelt und soweit in die Stiftaufnahme im Lagergehäuse eingeführt, bis er in die Öffnung der Lagerkartusche eingreift. Anschließend wird der Sicherungsstift mit seinem Außengewindeabschnitt in den komplementär ausgebildeten Innengewindeabschnitt der Stiftaufnahme eingeschraubt, bis er mit seinem Kopf auf der Radialstufe aufliegt. Mit diesem Verfahren lässt sich der Sicherungsstift vergleichsweise einfach in das Lagergehäuse einsetzen und ein Ausrichten der Lagerkartusche erreichen, bevor der Sicherungsstift über die Verschraubung fixiert wird. Durch den Einsatz des Führungsstiftes kann sogar ein exaktes Ausrichten der Lagerkartusche noch vor dem eigentlichen Auffädeln des Sicherungsstiftes auf den Führungsstift erreicht werden.

Alternativ ist auch denkbar, dass die Lagerkartusche zunächst in eine Lageröffnung des Lagergehäuses eingelegt und dann ein Zentrierdorn in die Stiftaufnahme im Lagergehäuse und in die Öffnung der Lagerkartusche eingeschoben und dadurch die Lagerkartusche ausgerichtet wird. Nach Entnahme des Zentrierdorns wird der Sicherungsstift soweit in die Stiftaufnahme eingeführt, bis er in die Öffnung der Lagerkartusche eingreift. Anschließend wird der Sicherungsstift eingeschraubt, bis er mit seinem Kopf auf der Radialstufe aufliegt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch
- Fig. 1: eine Detaildarstellung einer möglichen Ladeeinrichtung im Bereich eines Sicherungsstiftes und einer zugehörigen lagergehäuseseitigen Stiftaufnahme,
- Fig. 2: eine Darstellung wie in Fig. 1, jedoch bei in die Stiftaufnahme eingeschraubtem Sicherungsstift,
- Fig. 3a - c: einzelne Verfahrensschritte zur Montage des Sicherungsstifts mit Hilfe eines Führungsstifts.

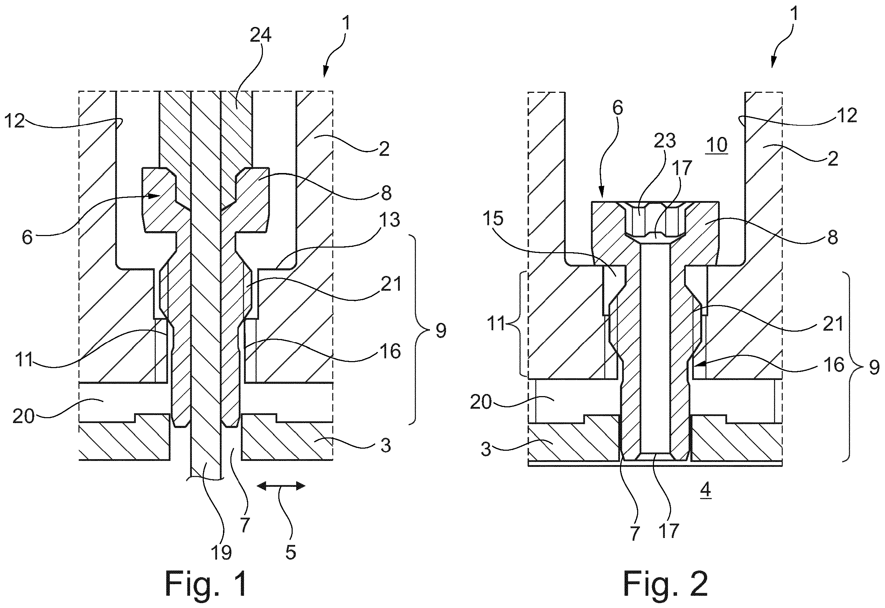

Entsprechend den Figuren 1 bis 3, weist eine erfindungsgemäße Ladeeinrichtung 1, welche beispielsweise als Abgasturbolader ausgebildet sein kann, ein Lagergehäuse 2 sowie eine darin angeordnete Lagerkartusche 3 zur Lagerung einer Welle 4 auf. In Axialrichtung 5 sowie gegen ein Verdrehen, wird die Lagerkartusche 3 mittels eines Sicherungsstifts 6 gesichert, wobei der Sicherungsstift 6 im montierten Zustand in eine Öffnung 7 an der Lagerkartusche 3 eingreift. Der Sicherungsstift 6 selbst besitzt einen Kopf 8 und einen Schaftabschnitt 9, wobei in dem Lagergehäuse 2 eine Stiftaufnahme 10 vorgesehen ist, mit einem ersten Abschnitt 11, einem zweiten Abschnitt 12 und ggf. einem dritten Abschnitt 22. Der zweite Abschnitt 12 besitzt dabei einen größeren Durchmesser als der erste Abschnitt 11 und geht über eine Radialstufe 13 in den ersten Abschnitt 11 über. Diese Radialstufe 13 bildet bei montiertem Sicherungsstift 6 einen Axialanschlag für den Kopf 8 des Sicherungsstiftes 6, wobei in dieser Beziehung die Axialrichtung des Sicherungsstiftes 6 orthogonal zur Axialrichtung 5 ist.

In montiertem Zustand ist der Sicherungsstift 6 über eine Schraubverbindung in der Stiftaufnahme 10 fixiert. In dem ersten Abschnitt 11 sind hierzu ein Innengewindeabschnitt 16 und am Schaftabschnitt 9 ein komplementär dazu ausgebildeter Außengewindeabschnitt 21 vorgesehen, die zusammen die Verschraubung bilden.

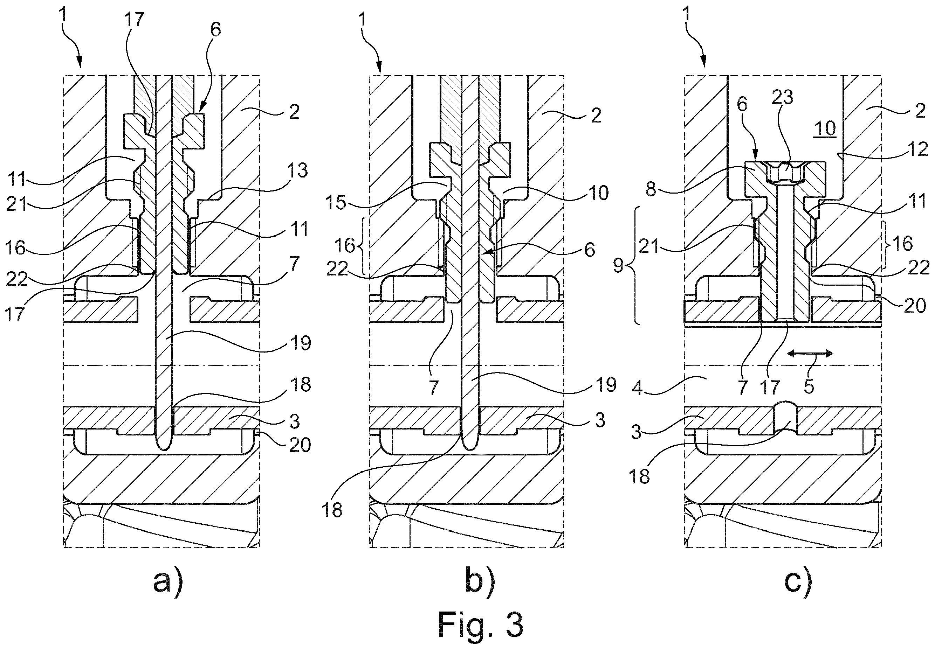

Eine Länge L des Schaftabschnitts 9 des Sicherungsstiftes 6 ist erfindungsgemäß so bemessen, dass dieser beim Montieren (vergleiche Figur 1 und 3b) zuerst in die Öffnung 7 der Lagerkartusche 3 eingreift und diese ausrichtet, bevor der Außengewindeabschnitt 21 mit dem Innengewindeabschnitt 16 zusammenwirkt und dadurch Kräfte auf den Sicherungsstift 6 ausgeübt werden. Hierdurch ist es möglich, den Sicherungsstift 6 ohne große Kräfte in die Öffnung 7 der Lagerkartusche 3 einzuführen, wodurch ein Ausrichten und Fixieren der Lagerkartusche 3 möglich ist, ohne dass dabei Beschädigungen befürchtet werden müssen. Wenn der Sicherungsstift 6 mit seinem Schaftabschnitt 9 gerade in die zugehörige Öffnung 7 der Lagerkartusche 3 eingreift, wobei zum Zentrieren notwendige Zentriertiefe z.B. 0,7 mm beträgt, liegt der Außengewindeabschnitt 21 noch oberhalb der Oberkante des Innengewindeabschnitts 16 der Stiftaufnahme 10.

Zudem ist es mit der erfindungsgemäßen Ladeeinrichtung 1 möglich, die gesamte Stiftaufnahme 10 im Lagergehäuse 2 mit Ausnahme des Innengewindeabschnitts 16 mit vergleichsweise großen Toleranzen und damit kostengünstig herzustellen. Lediglich die vergleichsweise kleine Fläche im Bereich des Innengewindeabschnitts 16 der Stiftaufnahme 10 muss dabei eng toleriert werden. Analog gilt dies auch für den Sicherungsstift 6, der ausschließlich im Bereich des Außengewindeabschnitts 21 enger toleriert, das heißt mit geringeren Toleranzen bearbeitet werden muss.

Betrachtet man die Figuren 1 bis 3 weiter, so kann man erkennen, dass der Sicherungsstift 6 eine axiale Durchgangsöffnung 14 aufweist, die zudem nach der Montage als Schmierölkanal genutzt wird, um die Lagerung der Welle 4 ausreichend mit Schmierstoff, beispielsweise Öl, zu versorgen. An zumindest einem Längsende der axialen Durchgangsöffnung 14 kann eine Fase 17 angeordnet sein, die ein Auffädeln auf einen Führungsstift 19 (vgl. Fig 1 und 3) erleichtert.

Zwischen dem Kopf 8 und dem Schaftabschnitt 9 des Sicherungsstiftes 6 kann dabei ein Freistich 15 vorgesehen sein, welcher eine definierte Anlage der Unterkante des Kopfes 8 auf der Radialstufe 13 erlaubt und zudem unter Umständen auftretenden Schmutz aufnehmen kann, ohne dass dieser eine gewünschte Montageendlage des Sicherungsstiftes 6 beeinträchtigt. Derartige die Montage günstig beeinflussende Fasen können selbstverständlich auch an einem freien Ende des Schaftabschnitts 9 oder am Kopf 8 des Sicherungsstiftes 6 angeordnet sein.

Zweckmäßig ist in der Stiftaufnahme 10 ein dritter Abschnitt 22 vorgesehen, der zwischen dem ersten Abschnitt 11 mit dem Innengewindeabschnitt 16 und einer Lageröffnung 20 des Lagergehäuses 2 zur Lagerung der Welle 4 liegt und der komplementär zum Schaftabschnitt 9 des Sicherungsstiftes 6 ausgebildet ist und kein Innengewinde aufweist. Komplementär soll dabei bedeuten, dass der Schaftabschnitt 9 vorzugsweise spielfrei durch den dritten Abschnitt 22 gesteckt werden kann. Der lagergehäuseseitige Innengewindeabschnitt 16 ist somit nicht durchgängig ausgebildet, sondern in Richtung der Lagerkartusche 3 begrenzt, wodurch beispielsweise eine Eindrehbegrenzung durch den dritten Abschnitt 22 und durch das Aufliegen des Kopfes 8 auf der Radialstufe 13 gegeben ist. Dabei kann der dritte Abschnitt 22 vorzugsweise auch als Zentrierbohrung für den Sicherungsstift 10 dienen, die eine besonders genaue Positionierung des Sicherungsstifts 6 und damit der Lagerbuchse 3 (=> geringe Konturspalte am Turbinen- und Verdichterrad) erlaubt.

Am Kopf 8 des Sicherungsstiftes 6 kann zudem eine Werkzeugaufnahme 23 zur Aufnahme eines Drehwerkzeugs 24 (vgl. Fig. 3) angeordnet sein.

Betrachtet man die Ladeeinrichtung 1 gemäß den Figuren 3a bis 3c, so kann man erkennen, dass an der der Öffnung 7 gegenüberliegenden Seite der Lagerkartusche 3 eine Führungsstiftaufnahme 18 zur Aufnahme eines Führungsstifts 19 angeordnet ist. Über diesen Führungsstift 19 kann der Sicherungsstift 6 bei der Montage einfach geführt werden, indem er auf den Führungsstift 19 mit seiner Durchgangsöffnung 14 aufgefädelt wird.

Eine Montage der Lagerkartusche 3 in der Ladeeinrichtung 1 sowie ein Einbringen des Sicherungsstiftes 6 können dabei beispielsweise wie folgt erfolgen:
Zunächst wird die Lagerkartusche 3 vorausgerichtet in eine Lageröffnung 20 des Lagergehäuses 2 eingelegt bzw. eingeschoben, so dass die Öffnung 7 der Lagerkartusche 3 in etwa mit der Stiftaufnahme 10 fluchtet. Anschließend wird der Führungsstift 19 entsprechend der Figur 3a so weit in die Stiftaufnahme 10 eingeführt, dass er sowohl durch die Öffnung 7 der Lagerkartusche 3 geführt ist, als auch durch die gegenüberliegende Führungsstiftaufnahme 18. Hierdurch ist eine eindeutige und exakt vordefinierte Ausrichtung und Fixierung der Lagerkartusche 3 relativ zum Lagergehäuse 2 der Ladeeinrichtung 1 möglich. Anschließend wird der Sicherungsstift 6 auf den Führungsstift 19 aufgefädelt und so weit eingeführt, bis er in die Öffnung 7 der Lagerkartusche 3 eingreift. Durch ein anschließendes Einschrauben des Außengewindeabschnitts 21 in den komplementär dazu ausgebildeten Innengewindeabschnitt 16 wird nun die Schraubverbindung zwischen dem Sicherungsstift 6 und der Stiftaufnahme 10 hergestellt und dadurch der Sicherungsstift 6 in der Stiftaufnahme 10 fixiert. Die Montageendstellung erreicht der Sicherungsstift 6, sofern er mit seinem Kopf 8 auf der Radialstufe 13 aufliegt und/oder sich der Sicherungsstift 6 aufgrund des lagergehäuseseitigen dritten Abschnitts 22 nicht mehr weiter eindrehen lässt.

Selbstverständlich kann ein Ausrichten der Lagerkartusche 3 relativ zum Lagergehäuse 2 der Ladeeinrichtung 1 auch durch ein Einführen eines hinsichtlich seines Durchmessers deutlich dickeren Führungsstiftes 19 bzw. Zentrierdorns erfolgen, der dann in die Öffnung 7 der Lagerkartusche 3 eingreift aber nicht in die Führungsstiftaufnahme 18 der Lagerkartusche 3. In diesem Fall ist ein maximaler Durchmesser des Führungsstiftes 19 bzw. Zentrierdorns im Bereich der Öffnung 7 geringfügig kleiner ist als ein Durchmesser der Öffnung 7 der Lagerkartusche 3. Eine Zentrierung der Lagerkartusche 3 über die Öffnung 7 der Lagerkartusche 3 bietet den wesentlichen Vorteil, dass es bei der Montage nicht zu einer Verspannung zwischen Sicherungsstift 6, Lagerkartusche 3 und Führungsstift 19 bzw. Zentrierdorn aufgrund einer herstellungsbedingten Fehlausrichtung der Führungsstiftaufnahme 18 gegenüber der Öffnung 7 kommen kann. In dieser Variante erfolgen Ausrichtung mittels Führungsstift 19 bzw. Zentrierdorn und Fixierung mittels Sicherungsstift 6 ebenfalls durch die Stiftaufnahme 10.

Unabhängig vom angewandten Montageverfahren handelt es sich generell um eine einseitige Montage, die montage- und bauraumtechnisch von Vorteil ist, da man nur einen Zugang von einer Seite benötigt, was bei den immer kompakter werdenden Gehäusen einen großen Vorteil darstellt.

Mit der erfindungsgemäßen Ladeeinrichtung 1 und mit dem erfindungsgemäßen Verfahren lässt sich die Lagerkartusche 3 vergleichsweise einfach im Lagergehäuse 2 der Ladeeinrichtung 1 montieren, wobei zusätzlich folgende Vorteile gegeben sind:
- einfache und kostengünstige Herstellung der Stiftaufnahme 10, da lediglich eine kleine Fläche (Innengewindeabschnitt 16) der Stiftaufnahme 10 eng toleriert werden muss,
- einfache und kostengünstige Herstellung des Sicherungsstifts 6, da lediglich eine kleine Fläche (Außengewindeabschnitt 21) des Sicherungsstifts 6 eng toleriert werden muss,
- einfaches Ausrichten der Lagerkartusche 3 durch den Führungsstift 19 bzw. den Sicherungsstift 6 vor dem Aufbringen großer Kräfte und damit ein Verhindern von Beschädigungen,
- zuverlässiges Fixieren des Sicherungsstiftes 6 durch die Schraubverbindung,
- einseitige Montagemöglichkeit, die einen Zugang nur von einer Seite benötigt.

## Patentansprüche

1. Ladeeinrichtung (1), insbesondere ein Abgasturbolader,
- mit einem Lagergehäuse (2) und einer darin angeordneten Lagerkartusche (3) zur Lagerung einer Welle (4),
- mit einem Sicherungsstift (6) zur Sicherung der Lagerkartusche (3) gegen ein Verdrehen und ein Verschieben in Axialrichtung (5), wobei der Sicherungsstift (6) in montiertem Zustand in eine Öffnung (7) an der Lagerkartusche (3) eingreift, wobei
- in dem Lagergehäuse (2) eine Stiftaufnahme (10) vorgesehen ist, mit einem ersten Abschnitt (11) mit einem Innengewindeabschnitt (16) und einem zweiten Abschnitt (12),
- der Sicherungsstift (6) einen Kopf (8) und einen Schaftabschnitt (9) mit einem Außengewindeabschnitt (21) aufweist,
- der zweite Abschnitt (12) einen größeren Durchmesser aufweist als der erste Abschnitt (11) und über eine Radialstufe (13) in den ersten Abschnitt (11) übergeht,
- die Radialstufe (13) einen Axialanschlag für den Kopf (8) des Sicherungsstiftes (6) bildet, **dadurch gekennzeichnet**
- **dass** eine Länge (L) des Schaftabschnitts (9) des Sicherungsstifts (6) so bemessen ist, dass dieser beim Montieren zuerst in die Öffnung (7) der Lagerkartusche (3) eingreift und diese ausrichtet, bevor der Außengewindeabschnitt (21) mit dem Innengewindeabschnitt (16) zusammenwirkt.

2. Ladeeinrichtung nach Anspruch 1,
**dadurch gekennzeichnet,**
**dass** der Sicherungsstift (6) eine axiale Durchgangsöffnung (14) aufweist.

3. Ladeeinrichtung nach Anspruch 2,
**dadurch gekennzeichnet,**
**dass** die axiale Durchgangsöffnung (14) als Schmierölkanal ausgebildet ist.

4. Ladeeinrichtung nach Anspruch 3,
**dadurch gekennzeichnet,**
**dass** an zumindest einem Längsende der axialen Durchgangsöffnung (14) eine Fase (17) angeordnet ist.

5. Ladeeinrichtung nach einem der vorhergehenden Ansprüche,
**dadurch gekennzeichnet,**
**dass** zwischen dem Kopf (8) und dem Außengewindeabschnitt (21) des Sicherungsstiftes (6) ein Freistich (15) vorgesehen ist.

6. Ladeeinrichtung nach einem der vorangehenden Ansprüche,
**dadurch gekennzeichnet,**
**dass** in der Stiftaufnahme (10) ein dritter Abschnitt (22) vorgesehen ist, der zwischen dem ersten Abschnitt (11) mit dem Innengewindeabschnitt (16) und einer Lageröffnung (20) des Lagergehäuses (2) liegt und der komplementär zum Schaftabschnitt (9) des Sicherungsstiftes (6) ausgebildet ist und kein Innengewinde aufweist.

7. Ladeeinrichtung nach einem der vorangehenden Ansprüche,
**dadurch gekennzeichnet,**
**dass** die Lagerkartusche (3) an einer der Öffnung (7) gegenüberliegenden Seite eine Führungsstiftaufnahme (18) aufweist.

8. Verfahren zur Montage einer Lagerkartusche (3) in einer Ladeeinrichtung (1) nach Anspruch 7,
**dadurch gekennzeichnet,**
- **dass** die Lagerkartusche (3) in eine Lageröffnung (20) des Lagergehäuses (2) eingelegt wird,
- **dass** ein Führungsstift (19) in die Stiftaufnahme (10) im Lagergehäuse (2) und durch die Öffnung (7) der Lagerkartusche (3) bis in die Führungsstiftaufnahme (18) eingeschoben und dadurch die Lagerkartusche (3) ausgerichtet wird,
- **dass** der Sicherungsstift (6) auf den Führungsstift (19) aufgefädelt und soweit in die Stiftaufnahme (10) eingeführt wird, bis er in die Öffnung (7) der Lagerkartusche (3) eingreift,
- **dass** der Sicherungsstift (10) anschließend eingeschraubt wird, bis er mit seinem Kopf (8) auf der Radialstufe (13) aufliegt.

9. Verfahren zur Montage einer Lagerkartusche (3) in einer Ladeeinrichtung (1) nach einem der Ansprüche 1 bis 7,
**dadurch gekennzeichnet,**
- **dass** die Lagerkartusche (3) in eine Lageröffnung (20) des Lagergehäuses (2) eingelegt wird,
- **dass** ein Zentrierdorn in die Stiftaufnahme (10) im Lagergehäuse (2) und in die Öffnung (7) der Lagerkartusche (3) eingeschoben und dadurch die Lagerkartusche (3) ausgerichtet wird,
- **dass** der Sicherungsstift (6) soweit in die Stiftaufnahme (10) eingeführt wird, bis er in die Öffnung (7) der Lagerkartusche (3) eingreift,
- **dass** der Sicherungsstift (10) anschließend eingeschraubt wird, bis er mit seinem Kopf (8) auf der Radialstufe (13) aufliegt.

## Claims

1. Charging device (1), in particular an exhaust-gas turbocharger,
- having a bearing housing (2) and a bearing cartridge (3) arranged therein to bear a shaft (4),
- having a securing pin (6) to secure the bearing cartridge (3) against twisting and displacement in axial direction (5), whereby the securing pin (6), in the assembled state, engages into an opening (7) on the bearing cartridge (3),
whereby
- in the bearing housing (2) a pin receiver (10) is provided, having a first section (11) with a internally-threaded section (16) and a second section (12),
- the securing pin (6) has a head (8) and a shank section (9) with an externally-threaded section (21),
- the second section (12) has a larger diameter than the first section (11) and transitions into the first section (11) via a radial step (13),
- the radial step (13) forms an axial stop for the head (8) of the securing pin (6), **characterised in that**
- a length (L) of the shank section (9) of the securing pin (6) is sized such that, during assembly, said pin engages first into the opening (7) of the bearing cartridge (3) and aligns the same, before the externally-threaded section (21) interacts with the internally-threaded section (16).

2. Charging device according to claim 1,
**characterised in that**
the securing pin (6) has an axial through opening (14).

3. Charging device according to claim 2,
**characterised in that**
the axial through opening (14) is configured as lubricating-oil channel.

4. Charging device according to claim 3,
**characterised in that**
a bevel (17) is arranged on at least one longitudinal end of the axial through opening (14).

5. Charging device according to any of the previous claims,
**characterised in that**
an undercut (15) is provided between the head (8) and the externally-threaded section (21) of the securing pin (6).

6. Charging device according to any of the preceding claims,
**characterised in that**
a third section (22) is provided in the pin receiver (10), said third section lying between the first section (11) with the internally-threaded section (16) and a bearing opening (20) of the bearing housing (2) and being configured complementary to the shank section (9) of the securing pin (6) and having no internal thread.

7. Charging device according to any of the preceding claims,
**characterised in that**
the bearing cartridge (3) has a guide pin receiver (18) on a side opposite the opening (7).

8. Method for the assembly of a bearing cartridge (3) in a charging device (1) according to claim 7,
**characterised in that**
- the bearing cartridge (3) is placed into a bearing opening (20) of the bearing housing (2),
- a guide pin (19) is pushed into the pin receiver (10) in the bearing housing (2) and through the opening (7) of the bearing cartridge (3) as far as the guide pin receiver (18) and thus the bearing cartridge (3) is aligned,
- the securing pin (6) is slid onto the guide pin (19) and inserted into the pin receiver (10), until it engages into the opening (7) of the bearing cartridge (3),
- the securing pin (10) is then screwed in, until its head (8) lies on the radial step (13).

9. Method for the assembly of a bearing cartridge (3) in a charging device (1) according to any of claims 1 to 7,
**characterised in that**
- the bearing cartridge (3) is placed into a bearing opening (20) of the bearing housing (2),
- a centring pin is pushed into the pin receiver (10) in the bearing housing (2) and into the opening (7) of the bearing cartridge (3) and thus the bearing cartridge (3) is aligned,
- the securing pin (6) is inserted into the pin receiver (10), until it engages into the opening (7) of the bearing cartridge (3),
- the securing pin (10) is then screwed in, until its head (8) lies on the radial step (13).

## Revendications

1. Dispositif de charge (1), en particulier un turbocompresseur à gaz,
- avec un logement de palier (2) et une cartouche de palier (3) disposée à l'intérieur de celui-ci pour le stockage d'un arbre (4),
- avec une goupille d'arrêt (6) pour sécuriser la cartouche de palier (3) contre une rotation et un déplacement dans la direction axiale (5), dans laquelle la goupille d'arrêt (6) s'enclenche dans une ouverture (7) sur la cartouche de palier (3) à l'état monté, dans laquelle
- un logement de goupille (10) est prévu dans le logement de palier (2), avec une première section (11) avec une section de filetage intérieur (16) et une deuxième section (12),
- la goupille d'arrêt (6) présente une tête (8) et une section de tige (9) avec une section de filetage extérieur (21),
- la deuxième section (12) présente un diamètre plus grand que la première section (11) et passe dans la première section (11) par l'intermédiaire d'un palier radial (13),
- le palier radial (13) forme une butée axiale pour la tête (8) de la goupille d'arrêt (6), **caractérisée en ce**
- **qu'**une longueur (L) de la section de tige (9) de la goupille d'arrêt (6) est dimensionnée pour qu'elle s'enclenche d'abord dans l'ouverture (7) de la cartouche de palier (3) lors du montage et aligne celle-ci, avant que la section de filetage extérieur (21) coopère avec la section de filetage intérieur (16).

2. Dispositif de charge selon la revendication 1,
**caractérisé en ce**
**que** la goupille d'arrêt (6) présente une ouverture traversante axiale (14).

3. Dispositif de charge selon la revendication 2,
**caractérisé en ce**
**que** l'ouverture traversante axiale (14) est conçue comme un passage d'huile de lubrification.

4. Dispositif de charge selon la revendication 3,
**caractérisé en ce**
**qu'**un chanfrein (17) est disposé sur au moins une extrémité longitudinale de l'ouverture traversante axiale (14).

5. Dispositif de charge selon l'une quelconque des revendications précédentes,
**caractérisé en ce**
**qu'**une rainure de dégagement (15) est prévue entre la tête (8) et la section de filetage extérieur (21) de la goupille d'arrêt (6).

6. Dispositif de charge selon l'une quelconque des revendications précédentes,
**caractérisé en ce**
**qu'**une troisième section (22) est prévue dans le logement de goupille (10) qui se situe entre la première section (11) avec la section de filetage intérieur (16) et une ouverture de palier (20) du logement de palier (2) et qui est formée de façon complémentaire à la section de tige (9) de la goupille d'arrêt (6) et ne présente pas de filetage intérieur.

7. Dispositif de charge selon l'une quelconque des revendications précédentes,
**caractérisé en ce**
**que** la cartouche de palier (3) présente un logement de goupille de guidage (18) sur un côté opposé à l'ouverture (7).

8. Procédé de montage d'une cartouche de palier (3) dans un dispositif de charge (1) selon la revendication 7,
**caractérisé en ce**
- **que** la cartouche de palier (3) est introduite dans une ouverture de palier (20) du logement de palier (2),
- **qu'**une goupille de guidage (19) est poussée dans le logement de goupille (10) dans le logement de palier (2) et à travers l'ouverture (7) de la cartouche de palier (3) jusqu'au logement de goupille de guidage (18) et en ce que la cartouche de palier (3) est ainsi alignée,
- **que** la goupille d'arrêt (6) est enfilée sur la goupille de guidage (19) et insérée dans le logement de goupille (10) jusqu'à ce qu'elle s'enclenche dans l'ouverture (7) de la cartouche de palier (3),
- **que** la goupille d'arrêt (10) est ensuite vissée jusqu'à ce qu'elle repose avec sa tête (8) sur le palier radial (13).

9. Procédé de montage d'une cartouche de palier (3) dans un dispositif de charge (1) selon l'une quelconque des revendications 1 à 7,
**caractérisé en ce**
- **que** la cartouche de palier (3) est introduite dans une ouverture de palier (20) du logement de palier (2),
- **qu'**un goujon de centrage est poussé dans le logement de goupille (10) dans le logement de palier (2) et dans l'ouverture (7) de la cartouche de palier (3) et en ce que la cartouche de palier (3) est ainsi alignée,
- **que** la goupille d'arrêt (6) est insérée dans le logement de goupille (10) jusqu'à ce qu'elle s'enclenche dans l'ouverture (7) de la cartouche de palier (3),
- **que** la goupille d'arrêt (10) est ensuite vissée jusqu'à ce qu'elle repose avec sa tête (8) sur le palier radial (13).
